(19) Europäisches Patentamt
European Patent Office
Office européen des brevets

(11) EP 0 580 351 B1

## (12) EUROPEAN PATENT SPECIFICATION

(45) Date of publication and mention
of the grant of the patent:
**27.09.2000 Bulletin 2000/39**

(51) Int. Cl.⁷: **H02J 7/10**

(21) Application number: **93305510.5**

(22) Date of filing: **14.07.1993**

(54) **Battery charging apparatus**

Batterieladegerät

Appareil de charge de batterie

(84) Designated Contracting States:
**DE FR GB**

(30) Priority: **21.07.1992 JP 21548592**
**29.03.1993 JP 9367893**

(43) Date of publication of application:
**26.01.1994 Bulletin 1994/04**

(73) Proprietor: **SONY CORPORATION**
**Tokyo (JP)**

(72) Inventors:
• **Yamazaki, Yasuharu,**
**c/o Int. Prop. Division**
**Shinagawa-ku, Tokyo 141 (JP)**
• **Nakamura, Shoichi,**
**c/o Int. Prop. Division**
**Shinagawa-ku, Tokyo 141 (JP)**

(74) Representative:
**Cotter, Ivan John et al**
**D. YOUNG & CO.**
**21 New Fetter Lane**
**London EC4A 1DA (GB)**

(56) References cited:
**EP-A- 0 314 155        EP-A- 0 473 514**
**WO-A-88/05222        WO-A-92/11680**
**DE-A- 4 027 146        FR-A- 2 274 156**
**US-A- 3 944 904        US-A- 3 963 976**
**US-A- 4 710 694        US-A- 4 727 306**

• **EDN ELECTRICAL DESIGN NEWS. vol. 37, no. 2**
**, 20 January 1992 , NEWTON, MASSACHUSETTS**
**US pages 87 - 88 SWAGER 'Controller quickly**
**charges NiCd batteries using curresnt pulses**
**and time derivatives'**

**Description**

This invention relates to battery charging apparatus.

DE-A-4 027 146 discloses a battery charger for charging Ni-Cd batteries having a DC power source and a current control transistor which supply a charging current to a battery, a charge controller which supplies pulses to the transistor to control the charging current, and means for detecting the voltage of the battery and in response to which the controller controls charging. The charger has three charging modes: an initial test mode; a main charging mode; and a pulsed charge maintenance mode.

US-A-3 944 904 discloses a battery charger which charges batteries with a constant direct current to a predetermined voltage Vx, and then continues to charge the battery to its rated level $V_R$ by means of a pulsed charging current.

EP-A-0 473 514 discloses a battery charger for charging a secondary battery which has an infrared radiation sensor for detecting the surface temperature of the secondary battery while the secondary battery is being charged. The charging control circuit stops charging the secondary battery, typically an Ni-MH battery, when the surface temperature detected by the infrared radiation sensor has reached a predetermined temperature. The battery charger also has a potential detector for detecting an electric potential of the secondary battery. The charging control circuit stops charging the secondary battery, typically an Ni-Cd battery, when the electric potential detected by the potential detector starts dropping after the battery has fully been charged.

EP-A-0 314 155 discloses a battery charger, controlled by a CPU, for charging a group of batteries. The CPU prioritizes the batteries for charging. Once a battery has been fully charged it receives periodic trickle charging to prevent self-discharge.

The CPU reads the type of battery in the group by sensing indicators within the batteries and prioritizes batteries according to amp-hour ratings. A battery is chosen as the "priority one" battery.

The CPU monitors three parameters to determine when the priority one battery is nearly charged and therefore terminate the rated charging cycle of the priority one battery. First, the CPU continuously sums the time that the current is delivered to the priority one battery, and when the total time reaches 150% of the rated capacity, terminates the charging cycle and proceeds in the prioritization subroutine to reorder the batteries. Second, the CPU continuously monitors the battery temperature, and if the battery temperature exceeds a predetermined limit associated with safe charging of the battery, then the CPU proceeds to the prioritization subroutine. Third, the CPU continuously monitors the voltage of the priority one battery to determine when the voltage profile corresponds to that of a fully charged battery of the small cell type. If the first priority battery was nearly fully charged or fully charged, then the second or third parameter would probably trigger the end of the fast charge cycle. The charger pulses the fast charging current and the trickle charging current.

WO 92/1680 concerns a battery charger useful with several different types of battery. The charger senses, from an indication in a battery, the battery type. A look-up table in the charger stores charging algorithms and a microprocessor chooses the stored algorithm appropriate to the sensed battery type. The algorithm sets-up charge conditions based on current, voltage, charge time and battery temperature. For some battery types a full charge is indicated by a "complete" charge temperature. At, for instance the complete charge temperature, charging stops or alternatively trickle charging is started.

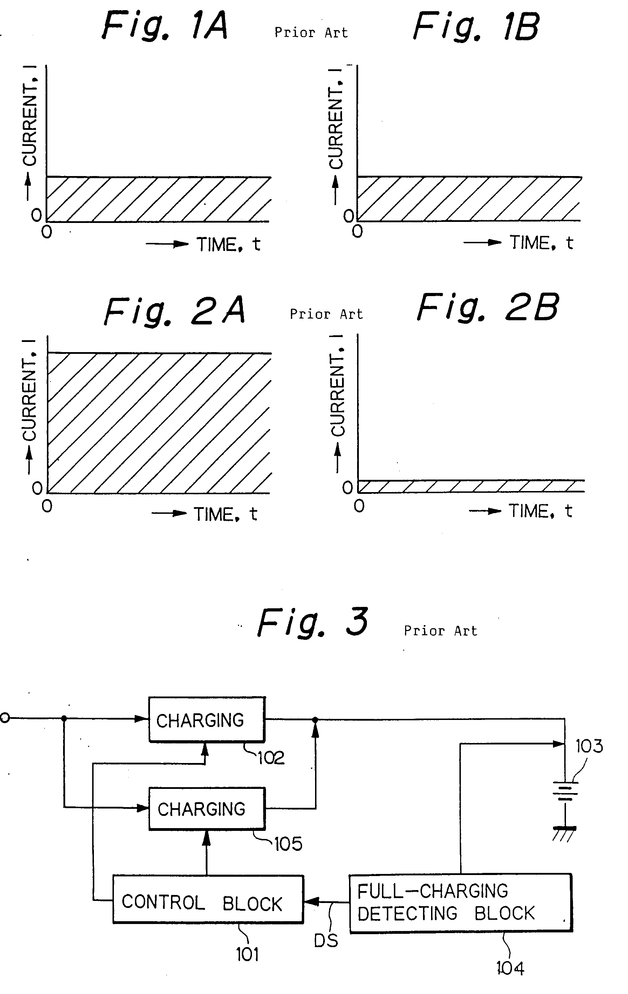

Portable video cameras, for example, use a chargeable battery of Nickel-Cadmium type or Nickel-Hydrogen type as an operating power source. For the chargeable battery there are two kinds of the capacity, for example, 600 mA/h and 1000 mA/h. Charging of the chargeable battery is performed by a dc power source which is obtained by rectifying an ac power source. In such charging, a constant current as shown in Fig. 1A is supplied to the chargeable battery. In addition, in order to make up for a decrease of charge due to self-discharge, even after a completion of charging, a charging current as shown in Fig. 1B is supplied to the chargeable battery.

According to the charging method mentioned above, even after a completion of charging, the same charging current as that in charging is supplied to the chargeable battery. In the meantime, since the amount of self-discharge is not so much, it is not necessary to charge with the current as shown in Fig. 1B. Therefore, there is a case where charging is performed by a current as shown in Figs. 2A and 2B. That is, in a quick charging, a relatively large constant current is shown in Fig 2A is supplied to the chargeable battery. After a completion of charging, in order to make up for the self-discharged charge, a relatively small constant current (refer to Fig. 2B) as compared with that in the quick charging is supplied to the chargeable battery.

Fig. 3 shows a circuit block diagram of the battery charging apparatus to supply the chargeable battery with such a current as shown in Figs. 2A and 2B. In addition, charging to the chargeable battery is made either by a quick charging for the short time charging or by a normal charging for the normal time charging. For example, if charging is made by the normal charging, then a control signal supplied from a control block 101 activates a charging block 102 to flow a current I, for the normal charging to charge the chargeable battery 103.

In addition, whether the chargeable battery 103 is fully charged or not is detected in a full-charge detecting block 104. If the full-charge detecting block 104 detects that the chargeable battery 103 has already been fully charged, a detection signal DS is supplied from the full-charge detecting block 104 to the control block 101. A control signal for controlling the amount of the current is supplied from the control block 101 to the charging block 102. The current to be supplied to the chargeable battery 103 becomes a relatively small constant current as shown in Fig. 2B.

If charging is made by the quick charging, then a control signal output from the control block 101 activates a charging block 105 to flow a current I2 for a quick charging to charge the chargeable battery 103. In the same way as mentioned above, if the full-charge detecting block 104 detects that the chargeable battery 103 is fully charged, then a relatively small constant current is supplied to the chargeable battery 103.

Nevertheless, even if such a circuit configuration has been achieved, the chargeable battery is forced to be charged at all times.

As mentioned above, if the chargeable battery is charged at all times, there occurs an over-charge and the cell characteristics of the battery could be degraded. Moreover, if a small charging current is supplied at all times after the full-charge, then the drop in charge efficiency could result in no appropriate charging.

In addition, a battery charging apparatus having a plurality of charging modes such as a quick charging mode, a normal charging mode, or the like, requires circuits as many as the number of charging modes. Therefore, the number of parts will also increase to prevent the battery charging apparatus from being miniaturized. Moreover, if an IC is adopted to the control block, then pins of the IC are used for the quick charging and normal charging circuits. However, there is a limit to the number of the pins of the IC. For example, pins reserved for other signal lines could be used for the charging circuits to restrict the function of IC itself.

According to the invention there is provided a battery charging apparatus comprising: a dc power supply for supplying a charging current; switching means connected between the dc power supply and a chargeable battery for switching the charging current according to control pulses supplied thereto; means including a battery voltage detector for detecting the charging condition of a battery being charged; and a controller ranged to supply the control pulses to the switching means in dependence upon the detected condition of the battery; wherein the detecting means further includes a battery temperature detector connected to the controller, and the controller stores battery characteristic data and includes a charging timer, the controller responding to the detected voltage, temperature and charging time to change from a charging mode in which the battery is fully charged by the charging current to a charge maintenance mode in which the charge is maintained by a pulsed charge maintenance current, characterised in that the controller calculates the pulse width (CS2) of the pulsed charge maintenance current based on the magnitude of the charging current and a value for monthly self discharging stored as battery characteristic data in the controller.

Charging to cope with an over-charge or a self-discharge may be made with a periodic pulse current having a constant amplitude. This results in charging without degrading the battery characteristics. In addition, switching between charging modes is performed by the charging controller. Thereby, different charging circuits are integrated so that the size of the apparatus can be reduced.

An embodiment of the invention described below provides: a battery charging apparatus wherein charging can be made without degrading the battery characteristics even if a chargeable battery has been connected to the battery charging apparatus for a long period, and wherein the battery capacity can be maintained for a long period; and a battery charging apparatus wherein a plurality of circuits for different charging modes can be integrated so that the circuit scale can be reduced.

The invention will now be further described, by way of illustrative and non-limiting example, with reference to the accompanying drawings, in which:

> Figs. 1A and 1B are schematic diagrams to show an example of a charging current in the prior art;
> Figs. 2A and 2B are schematic diagrams to show another example of a charging current in the prior art;
> Fig. 3 is a circuit block diagram of an example of the existing battery charging apparatus;
> Fig. 4 is a circuit block diagram of a battery charging apparatus according to a first embodiment of the invention;
> Fig. 5 is a schematic diagram of an example of the characteristics of the chargeable battery;

An Embodiment of the invention will now be explained below with reference to the drawings.

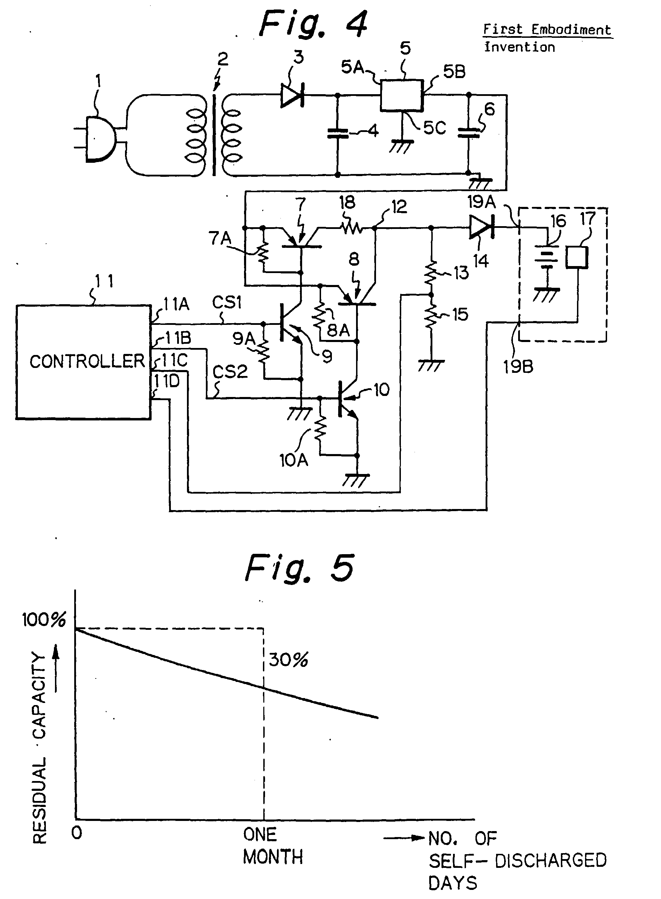

Fig. 4 shows a circuit block diagram of a battery charging apparatus according to an embodiment of the invention. In Fig. 4, an ac plug 1 is connected to the primary winding of a transformer 2. A diode 3 is connected to the one end on the secondary winding of the transformer 2. The other end of the diode 3 is connected to one end of a capacitor 4 and a terminal 5A of a dc-dc converter 5. A terminal 5C of the dc-dc converter 5 is grounded, and a terminal 5B is connected to one end of a capacitor 6. The other end of the secondary winding of the transformer 2 is connected to the other end of the capacitor 4 and the other end of the capacitor 6.

In addition, the one end of the capacitor 6 is connected to an emitter of a transistor 7 and an emitter of a transistor 8. A collector of the transistor 7 is connected to a collector of the transistor 8 at a junction point 12 through a resistor 18 for limiting a current. A base of the transistor 7 is connected to a collector of a transistor 9, and a base of the transistor 8 is connected to a collector of a transistor 10, respectively. A base of the transistor 9 is connected to a terminal 11A of a charging controller 11, and a base of the transistor 10 is connected to a terminal 11B of the charging controller 11, respectively. In addition, both an emitter of the transistor 9 and an emitter of the transistor 10 are grounded. Resistors 7A, 8A, 9A and 10A for bias are connected between each base and emitter of the transistors 7, 8, 9 and 10.

The junction point 12 is connected to one end of a resistor 13 and one end of a diode 14. The other end of the resistor 13 is connected to a terminal 11C of the charging controller 11, and also connected to one end of a resistor 15. The other end of the resistor 15 is grounded. The resistor 13 and resistor 15 are used as resistors for the voltage detection for a chargeable battery. That is, a change of a charging voltage $\Delta V$ from the time at which a chargeable battery 16 which will be explained later is fully charged to the time at which discharging starts, is detected by the resistors 13 and 15. The other end of the diode 14 is connected to the chargeable battery 16 of an Nickel-Cadmium type or an Nickel-Hydrogen type through a terminal 19A. In addition, a battery temperature sensor 17 (for example, thermistor) for detecting the temperature of the chargeable battery 16 is mounted adjacent to the chargeable battery 16, and connected to a terminal 11D of the charging controller 11 through a terminal 19B. A temperature change $\Delta t$ of the chargeable battery 16 is detected by the battery temperature sensor 17.

A power source supplied from the ac plug 1 is dropped down to a specified voltage level by the transformer 2, and becomes a regulated dc power source through the diode 3 and the capacitor 4 in the dc-dc converter 5. An output from the dc-dc converter 5 is supplied to the emitter of the transistor 7 and the emitter of the transistor 8. If a normal charging is required, a control signal CS1 is applied from the terminal 11A of the charging controller 11 to the base of the transistor 9 to turn on the transistor 9. This allows the transistor 7 to be turned on. A collector current of the transistor 7 is supplied to the chargeable battery 16 through the resistor 18 and the diode 14. Thus, the normal charging is made.

If a quick charging is required, then a control signal CS2 from the terminal 11B of the charging controller 11 is applied to the base of the transistor 10 to turn on the transistor 10. This allows the transistor 8 to be turned on. A collector current of the transistor 8 is supplied through the diode 14 to the chargeable battery 16.

The operations of the charging controller 11 after the chargeable battery has been fully charged by the quick charging is described below. Whether the chargeable battery 16 has already been fully charged or not is determined by a signal supplied from a junction point between the resistors 13 and 15 connected to the terminal 11C of the charging controller 11, a signal supplied from the battery temperature sensor 17 to the terminal 11D of the charging controller 11, and a charging timer provided in the charging controller 11. Moreover, in addition to the charging timer, the charging controller 11 contains an input signal processing circuit, a data processing and memory circuit, and the like (not shown). The charging controller 11 is preferably constituted by a one-chip microcomputer.

In the input signal processing circuit, information on the charging timer, and information on voltage value and battery temperature supplied in analog values are converted to digital values. A digital output signal from the input signal processing circuit is supplied to the data processing and memory circuit. In the data processing and memory circuit, based on such a digital signal, the pulse width and its cycle of a current output from the terminal 11B of the charging controller 11 are calculated and stored. When self-discharging occurs after the chargeable battery 16 has been fully charged, then a pulse control signal CS2 is supplied from the terminal 11B in a predetermined cycle. Thus, the transistor 10 is periodically turned on to ensure the full-charging state. In this case, since the charging is made intermittently, the degradation of characteristics of the chargeable battery can be prevented.

The calculation of the pulse width is carried out based on characteristic data of the chargeable battery stored in the data processing and memory circuit of the charging controller 11 (refer to Fig. 5). The capacity of a chargeable battery having characteristic data as shown in Fig. 5 is given as 1000 mAh and the voltage thereof is 6V. According to characteristic data of the chargeable battery, the monthly self-discharging is found as 300 mAh. The amount of the battery self-discharging per hour is calculated from the result as follows:

$$\text{Discharging amount} = 300 \text{ mAh}/(30 \times 24)$$
$$= 0.416 \text{ mAh}$$

Moreover, assuming that the charging current is at 40 mA, the charging time, that is, the pulse width per hour is determined as follows:

$$\text{Charging time} = 0.416 \text{ mAh}/40 \text{ mA}$$
$$= 37.44 \text{ sec.}$$

From this calculation, the pulse width of the control signal CS2 supplied from the terminal 11B after the full-charging is determined as 37.44 sec., per hour. The value of the pulse current supplied to the chargeable battery at this time is equivalent to that in the quick charging. The pulse width may not be found as 37.44 sec. but, for example, some 40 to 50 sec.

The battery temperature sensor 17 is provided in the embodiment, so as to enable the detection of a temperature change Δt of the chargeable battery 67. Therefore, if a chargeable battery of Nickel-Hydrogen type which is weak for an over-charging is connected, then a quick charging has been made just before the full-charging, and thereafter a control signal from the battery temperature sensor is supplied to the charging controller, and switched over to the supplementary charging. Therefore, even when the chargeable battery of Nickel-Hydrogen type should be charged, charging can be suitably made. Since the chargeable battery of Nickel-Hydrogen type is as a practical matter hard to discharge, the trickle charging may not be carried out.

In addition, a resistor for the voltage detection is provided for the detection of a voltage change ΔV of the chargeable battery. Therefore, even if the chargeable battery of Nickel-Cadmium type is connected, it can be suitably charged. In the embodiment a voltage change ΔV and a battery temperature change Δt, etc. are supplied to the charging controller in order to switch over the charging mode. However for example, if the chargeable battery of Nickel-Cadmium type is connected, only the voltage change ΔV may be supplied to the charging controller , while if the chargeable battery of Nickel-Hydrogen type is connected, only the temperature change Δt may be supplied thereto.

Having described an illustrative embodiment of the present invention with reference to the accompanying drawings, it is to be understood that the invention is not limited to that embodiment, and that various changes and modifications may be effected therein by one skilled in the art without departing from the scope of the invention as defined in the appended claims.

According to the foregoing disclosure, miniaturization of circuit scale can be realized by uniting multiple circuits required for multiple charging modes into one circuit by use of a charging controller. In addition to this, even if an IC is used in the control block, the number of used pins of the IC can be decreased, and therefore the function of IC itself is not restricted. In addition, a battery temperature sensor is provided for the chargeable battery of Nickel-Hydrogen type, etc. which is weak for an over-charging, and a pulse supplementary charging is carried out corresponding to its detected output, so that full-charging can be achieved without degrading the battery characteristics. Therefore, the battery capacity of a chargeable battery can be maintained over a long period. On the other hand, for a chargeable battery of Nickel-Cadmium type, a means for the voltage detection is provided, whereby charging after the discharging can be made. Moreover, since the charging is intermittently repeated, it is possible to prevent the characteristics of the chargeable battery from being degraded.

## Claims

1.    A battery charging apparatus comprising:

a dc power supply (1 - 6) for supplying a charging current;

switching means (7, 8) connected between the dc power supply and a chargeable battery for switching the charging current according to control pulses supplied thereto;

means (13, 15, 17) including a battery voltage detector for detecting the charging condition of a battery being charged; and

a controller (11) arranged to supply the control pulses to the switching means in dependence upon the detected condition of the battery; wherein

the detecting means further includes a battery temperature detector (17) connected to the controller, and

the controller stores battery characteristic data and includes a charging timer, the controller responding to the detected voltage, temperature and charging time to change from a charging mode in which the battery is fully charged by the charging current to a charge maintenance mode in which the charge is maintained by a pulsed charge maintenance current, characterised in that the controller calculates the pulse width (CS2) of the pulsed charge maintenance current based on the magnitude of the charging current and a value for monthly self discharging stored as battery characteristic data in the controller.

2.    Apparatus according to claim 1, wherein the switching means comprises a first switching device (7) controlled by the controller (11) for charging the battery at a first rate via a first charging current path and a second switching device (8) controlled by the controller (11) for charging the battery at a second rate greater than the first rate via a second charging current path.

3.    Apparatus according to claim 2, wherein the controller supplies control pulses to one of the switching devices (7, 8) to carry out the charge maintenance mode.

4.    Apparatus according to claim 1, wherein the switching means comprises a switching device (8) for charging the battery, the switching device (8) being controlled by the controller (11) to operate in the said charging mode and in the said charge maintenance mode.

## Patentansprüche

1.    Batterieladevorrichtung, bestehend aus:

einer Gleichstromversorgung (1 - 6) zur Bereitstellung eines Ladestroms;

Schaltmitteln (7 - 8), welche zwischen der Gleichstromversorgung und einer aufladbaren Batterie zum Schalten des Ladestroms in Übereinstimmung mit Steuerimpulsen, welche den Schaltmitteln zugeführt werden, angeschlossen sind;

einer Einrichtung (13, 15, 17), welche einen Batteriespannungs-Detektor zur Detektion des Ladezustands der zu ladenden Batterie enthält; und

einer Steuerung (11), welche eingerichtet ist, um die Steuerimpulse den Schaltmitteln in Abhängigkeit des detektierten Zustands der Batterie zuzuführen; bei welcher

die Detektionseinrichtung ferner einen Batterietemperatur-Detektor (17), welcher mit der Steuerung verbunden ist, enthält, und

die Steuerung charakteristische Batteriedaten speichert und eine Lade-Zeitschaltung enthält, wobei die Steuerung auf die detektierte Spannung, die Temperatur und die Ladezeit anspricht, um von einem Ladezustand, in dem die Batterie durch den Ladestrom vollständig geladen worden ist, in einen die Ladung aufrechterhaltenden Zustand zu wechseln, in welchem die Ladung mittels eines die Ladung aufrechterhaltenden gepulsten Stroms aufrechterhalten wird, **dadurch gekennzeichnet**, dass die Steuerung die Impulsbreite (CS2) des die Ladung aufrechterhaltenden gepulsten Stroms auf der Basis der Größe des Ladestroms und eines Wertes für die monatliche Selbstentladung, welche als charakteristische Batteriedaten in der Steuerung gespeichert sind, berechnet.

2. Vorrichtung nach Anspruch 1, bei welcher die Schaltmittel eine erste durch die Steuerung (11) gesteuerte Schalteinrichtung (7) zum Laden der Batterie mit einem ersten Betrag über einen ersten Ladestrompfad und eine zweite durch die Steuerung (11) gesteuerte Schalteinrichtung (8) zum Laden der Batterie mit einem zweiten Betrag, welcher größer als der erste Betrag ist, über einen zweiten Ladestrompfad aufweisen.

3. Vorrichtung nach Anspruch 2, bei welcher die Steuerung Steuerimpulse einer der Schalteinrichtungen (7, 8) zuführt, um den die Ladung aufrechterhaltenden Zustand herbeizuführen.

4. Vorrichtung nach Anspruch 1, bei welcher die Schaltmittel eine Schalteinrichtung (8) zum Laden der Batterie aufweisen, wobei die Schalteinrichtung (8) durch die Steuerung (11) gesteuert wird, um in dem Ladezustand und in dem die Ladung aufrechterhaltenden Zustand zu arbeiten.

## Revendications

1. Appareil de charge de batterie comportant :

une alimentation continue (1-6) pour délivrer un courant de charge ; des moyens de commutation (7, 8) montés entre l'alimentation continue et une batterie rechargeable pour commuter le courant de charge conformément à des impulsions de contrôle qui lui sont appliquées ; des moyens (13, 15, 17) comprenant un détecteur de tension de batterie afin de détecter l'état de charge d'une batterie chargée ; et un contrôleur (11) agencé pour délivrer les impulsions de commande aux moyens de commutation en fonction de l'état détecté de la batterie ; dans lequel le moyen de détection comprend en outre un détecteur de température de batterie (17) relié au contrôleur, et le contrôleur mémorise des données caractéristiques de la batterie et comprend une minuterie de charge, le contrôleur répondant à la tension, à la température et au temps de charge détectés pour passer d'un mode de charge, dans lequel la batterie est complètement chargée par le courant de charge, à un mode d'entretien de charge dans lequel la charge est maintenue par un courant d'entretien de charge pulsé, caractérisé en ce que le contrôleur calcule la largeur d'impulsion (CS2) du courant d'entretien de charge pulsé en fonction de l'intensité du courant de charge et d'une valeur pour une décharge mensuelle en circuit ouvert mémorisées en tant que données caractéristiques de batterie dans le contrôleur.

2. Appareil selon la revendication 1, dans lequel le moyen de commutation comprend un premier dispositif de commutation (7) contrôlé par le contrôleur (11) pour charger la batterie à une première vitesse par l'intermédiaire d'un premier trajet de courant de charge et un second dispositif de commutation (8) contrôlé par le contrôleur (11) afin de charger la batterie à une seconde vitesse supérieure à la première vitesse par l'intermédiaire d'un second trajet de courant de charge.

3. Appareil selon la revendication 2, dans lequel le contrôleur délivre des impulsions de contrôle à l'un des dispositifs de commutation (7, 8) pour effectuer le mode d'entretien de charge.

4. Appareil selon la revendication 1, dans lequel les moyens de commutation comporte un dispositif de commutation (8) pour charger la batterie, le dispositif de commutation (8) étant contrôlé par le contrôleur (11) pour fonctionner selon ledit mode de charge et selon ledit mode d'entretien de charge.

**7**

## Fig. 1A    Prior Art    Fig. 1B

## Fig. 2A    Prior Art    Fig. 2B

## Fig. 3    Prior Art

## Fig. 4

First Embodiment
Invention

## Fig. 5